# EUROPEAN PATENT SPECIFICATION

(11) **EP 3 649 706 B1**
(45) Date of publication and mention of the grant of the patent: **27.04.2022**
(21) Application number: 18863910.8
(22) Date of filing: 23.02.2018
(51) Int. Cl.: B62M 6/50, B62M 3/16, B62J 45/411, B62J 45/421, B62J 45/416, B62J 45/413, H01R 39/12

(54) **SMART CRANK SYSTEM**
INTELLIGENTES KURBELSYSTEM
SYSTÈME DE MANIVELLE INTELLIGENTE

(30) Priority: 03.10.2017 US 201762567391 P; 15.11.2017 US 201715814364; 28.12.2017 US 201715857039
(43) Date of publication of application: 13.05.2020
(73) Proprietor: Paltorc, Inc., Milpitas, CA 95035 (US)
(72) Inventor: WANG, Jyh-Ping, Johnny, Milpitas CA 95035 (US); CHOU, Steve, Chih-Ching, Milpitas CA 95035 (US); WANG, Dann, Milpitas CA 95035 (US)
(74) Representative: Patentanwälte Geyer, Fehners & Partner mbB
(86) International application number: PCT/US2018/019584
(87) International publication number: WO 2019/070307

(56) References cited:
- EP-A1- 2 069 048
- WO-A1-2014/036011
- CN-U- 205 769 945
- TW-A- 201 226 263
- US-A- 3 921 745
- US-A1- 2004 084 238
- US-A1- 2010 024 590
- US-A1- 2016 052 583
- US-A1- 2016 052 583
- US-A1- 2016 159 434
- US-B1- 6 439 065
- US-B1- 9 616 968

## Description

### PRIORITY

This application relates to U.S. Patent Application No. 15/857,039, filed December 28, 2017 and U.S. Patent Application No. 15/814,364, filed November 15, 2017, which claims the priority benefit of U.S. Provisional Application No. 62/567,391 filed on October 3, 2017.

### FIELD

The present invention relates generally to electrical bicycles (e-bikes). More particularly, the present invention is directed to a smart crank system for such e-bikes that receives power and data through a rotating crank assembly.

### BACKGROUND

Conventional e-bike motor output power control is based on an input to the motor controller of the degree of rotation of the hand throttle, which is moved by the rider. This functions satisfactorily where the e-bike is solely or primarily powered by the electric motor. But a hand throttle is difficult to operate when the electric motor is configured to merely assist the rider in pedaling.

In some regions, like Europe, motor power is treated as an assisting power - PAS (Pedal Assist System) - to help the person ride the e-bike more easily, and not the primary means of powering the bike. The PAS is merely an electric motor assist to the rider, so PAS is used to make riding the e-bike more like a regular bike.

In PAS systems, if biker does not pedal, the motor does not generate any output power. Speed PAS is based on biker's pedaling speed. When e-bike goes uphill, the e-bike rider will need more power from the electric motor, but they cannot get that power from a Speed PAS system because their pedaling speed is slower due to going uphill. Therefore, a torque sensor PAS system is required to sense the rider's pedaling power, so that the control system can control the motor's output power appropriately.

However, if rider's two legs stand on both pedals, the torque force will be very high. In this situation, it would be dangerous for the assist motor to generate its highest power. Therefore, the bike's crank speed and crank position need to be taken into account for safely and effectively controlling the assist motor for the bike.

Providing torque and crank position data to the motor controller is a challenge. A wireless transmission means can be used. However, not all of the e-bike controllers on the market have wireless receivers. Providing an aftermarket wireless receiver for the motor controller is not a satisfactory solution either since it would require the manufacturer or rider to modify their e-bike controller hardware and software to talk to the aftermarket wireless receiver. That requires additional cost and time to adapt the motor controller to an aftermarket wireless system for receiving the torque and crank position data. Most of e-bike manufacturers are not willing to take extra steps to modify their e-bike controller hardware and software.

Another issue is that torque sensors alone are not good enough to make a torque PAS because it is necessary to detect the exact crank position to send the right control signals to control e-bike controller. Some torque sensor PAS vendors put torque sensing component(s) on pedal axle to sense the twisting power caused by both legs. But this makes it difficult to sense the crank positions and the rider's intention cannot be easily discerned. For example, reverse pedaling means the rider wants to brake; both cranks in parallel to ground position means biker is resting and the motor can adjust its power output correspondingly; when left crank is at the lowest position and right crank in upper position, the crank can detect that the rider is in a dismounting position so that motor can adjust accordingly, and so on.

Further, powering the crank sensors presents difficulties. To avoid twisting wires caused by moving crank, adding a battery on the crank itself is one way to provide power. But battery life limits the use of the smart crank system. Recharging or replacing batteries is inconvenient and can be expensive.

Another issue is that monitoring data of the user, such as heart rate, is not synchronized or coordinated with the exercise data measured from the device (e.g., pedaling force / speed / angle etc.).

TW 201 226 263 A discloses a smart crank system with the features of the preamble of claim 1.

Therefore, there remains a need to provide an improved smart crank control for e-bikes.

### SUMMARY

The invention is defined in independent claims 1 and 11. Preferred embodiments are defined in the dependent claims.

The present invention addresses at least some of the above-noted drawbacks. In one example embodiment, the invention senses crank speed and crank position via a micro controller, torque sensor, gyro and accelerator on the bike's crank. In certain embodiments, external power and control signals are passed to (and from) the micro controller and the e-bike controller through a throttle connector via slip rings around the crank with pogo pins connected to respective slip rings.

In other not claimed embodiments, the sensor data can be provided to an e-bike controller wirelessly via a wireless dongle coupled to the throttle connector of e-bike controller.

In still further not claimed embodiments, the sensor data can be processed and synced with heart rate or other user data and outputted to a synced smartphone and to the cloud.

The disclosure includes a smart crank control system, comprising a strain gauge disposed on the crank, a control board disposed on the crank and coupled to the strain gauge, the control board including gyro and accelerator motion sensors and a digital motion processor, and a slip ring disposed about the crank to provide for a power connection to the control board.

The control board can be coupled to the e-bike controller through the throttle connector of the e-bike.

The controller can be configured to determine a crank speed, a crank position and a torque data for the crank of the e-bike and report the crank speed, the crank position and the torque data. A throttle data can be computed and outputted as an analog or a digital signal via a connection to the throttle connector. The control board can include a digital to analog converter coupled to the micro controller so that the crank speed, the crank position and the torque data for the crank of the e-bike are converted to analog throttle data for the throttle control.

The control board can be coupled to the e-bike controller through the throttle connector of the e-bike via a cable or in a not claimed embodiment wirelessly. If wireless, the control board 106 can further include a wireless transceiver. A wireless transceiver dongle can be coupled to the e-bike controller through the throttle connector of the e-bike via a wire. The control board is then wirelessly connected to the wireless transceiver dongle. The wireless transceiver dongle can include a digital to analog converter so that a crank speed, a crank position and a torque data for the crank of the e-bike, if received in digital format, can be outputted as throttle data to the e-bike controller through throttle connector in an analog format. The e-bike controller can include a serial port wherein the wireless transceiver dongle is connected via the wire connection.

Pogo pin connectors can be coupled to the slip rings. A power input cable can be connected to the pogo pin connectors to supply power to the control board. A first end of a data cable can additionally or alternatively be connected to the pogo pin connectors. An opposing second end of the power or data cable can be connected to the throttle connector of the e-bike controller.

Health data for the user, such as heart rate, can in a not claimed embodiment also be passed to the control board through the slip rings and wirelessly transmitted by the control board with synced exercise data (e.g., pedaling force / speed / angle etc.) to a paired smartphone. All of the data can be uploaded by the app to a cloud account as well.

The disclosure also includes a method of providing electrical assistance to the rider of an e-bike. A torque data from a strain gauge disposed on a crank of the e-bike is determined by a smart crank controller. A crank speed from gyro and accelerator motion sensors and a digital motion processor provided to the crank of the e-bike is determined by a smart crank controller. A crank position from the digital motion processor provided to the crank of the e-bike is also determined by a smart crank controller. The pedaling force for the rider is determined. A data signal containing throttle data is passed through slip rings disposed around an axle of the crank of the e-bike. The data signal containing the throttle data is then passed to an e-bike controller through a throttle connector of the e-bike controller.

A first end of a data cable can be connected to the slip rings via a pogo pin connector and a second end of the data cable can be connected to the e-bike controller through the throttle connector. The torque data, crank speed and crank position can be used by the smart crank and transmitted as throttle data via a wire connection, or a in a not claimed embodiment via a wireless transceiver dongle. The throttle data communicated to the e-bike controller through throttle connector can be an analog signal.

The smart crank system can also determine whether a rider of the e-bike is reverse pedaling, whether a rider of the e-bike is resting with both cranks of the e-bike parallel to the ground, and whether the crank of the e-bike is in a dismount position. These determinations can be communicated to the e-bike controller through the throttle connector.

The disclosure further includes an e-bike. The e-bike includes a crank, an electric motor, an e-bike controller connected to the electric motor, a strain gauge disposed on the crank, a control board disposed on the crank and coupled to the strain gauge, and a slip ring disposed about the crank to provide for a rotational power coupling. The control board includes a gyro sensor, an acceleration motion sensor and a digital motion processor. The control board is coupled to the e-bike controller through the throttle connector via the plurality of slip rings and a conduit extending between the plurality of slip rings and the throttle connector of the e-bike.

The disclosure yet further discloses a smart crank control system for an e-bike. The e-bike includes a crank and an electric motor connected to an e-bike controller. The e-bike controller including a throttle connector. The smart crank system includes a control board disposed on the crank, a plurality of slip rings disposed about the crank and a plurality of metal springs disposed about the crank. The control board including a motion sensor, a digital motion processor and a micro controller. Each of the metal springs is in physical contact with a respective one of the slip rings. A power connection to the control board passes through the physical contact between at least one of the metal springs and the respective one of the slip rings. A throttle control signal or a throttle data from the control board can also be passed through the physical contact between at least one of the metal springs and the respective one of the slip rings.

A spring frame can be provided to the plurality of metal springs. The spring frame can be curved and define a plurality of apertures through which opposing ends of the plurality of metal springs can be disposed such that the opposing ends protrude inwardly of the curvature of the spring frame. An outer housing can be provided, wherein the spring frame and the plurality of springs are disposed within the outer housing, and wherein the slip rings are disposed within an inner diameter of the plurality of slip rings.

A power input cable can be connected to at least one of the plurality of metal springs. A data cable is connected to another one (or the same one) of the plurality of metal springs. The data cable can also be connected to the throttle connector of the e-bike controller.

The disclosure further includes a smart crank system comprising a control board disposed on the crank, a plurality of slip rings disposed about the crank and a plurality of curved metal springs disposed about the crank. A bearing, a non-rotating slip ring or a rotating bushing are disposed at either one or both ends of each of the plurality of curved metal springs. Each of the bearings/slip rings/bushings (ore pair thereof) is in physical contact with a respective one of the slip rings so that a power connection to the control board passes through that physical contact. An inner hub can be provided, wherein each of the plurality of metal springs is affixed to the inner hub. The bearings/slip rings/bushings contact an inner circumferential surface of a respective slip ring.

The above summary is not intended to limit the scope of the invention, or describe each embodiment, aspect, implementation, feature or advantage of the invention. The detailed technology and preferred embodiments for the subject invention are described in the following paragraphs accompanying the appended drawings for people skilled in this field to well appreciate the features of the claimed invention as defined in the appended claims.

### BRIEF DESCRIPTION OF THE DRAWINGS

FIG. 1 is a diagram of a smart crank system in accordance with certain embodiments.
FIG. 2 is another diagram of a smart crank system in accordance with not claimed embodiments.
FIG. 3 is a further diagram of a smart crank system in accordance with not claimed embodiments.
FIG. 4 is a perspective view of a crank with slip rings for a smart crank system in accordance with certain embodiments.
FIG. 5 is an inner side view of a crank with slip rings for a smart crank system in accordance with certain embodiments.
FIG. 6 is an outer side view of a crank with slip rings for a smart crank system in accordance with certain embodiments.
FIG. 7 is a top view of a crank with slip rings for a smart crank system in accordance with certain embodiments.
FIG. 8 is a perspective view of a slip ring and bearings connection mechanism for a smart crank system in accordance with certain embodiments.
FIG. 9 is another perspective view of a slip ring and bearings connection mechanism for a smart crank system in accordance with certain embodiments.
FIG. 10 is a perspective view of a slip ring and bearings connection mechanism for a smart crank system showing that it is joined with the crank head in accordance with certain embodiments.
FIG. 11 is a perspective view of a bearings assembly for a slip ring and bearings connection mechanism for a smart crank system.
FIG. 12 is a perspective view of a bearings assembly for a slip ring and bearings connection mechanism for a smart crank system.
FIG. 13 is a perspective view of a spring assembly for making an electrical connection for a smart crank system.
FIG. 14 is a perspective view of a spring frame for making an electrical connection for a smart crank system.
FIG. 15 is a perspective view of a spring for making an electrical connection for a smart crank system.
FIG. 16 is a perspective view of a spring assembly in a partial housing for making an electrical connection for a smart crank system.
FIG. 17 is a perspective view of a spring assembly and slip rings for making an electrical connection for a smart crank system.
FIG. 18 is a perspective view of a partial outer housing for housing components that make an electrical connection for a smart crank system.
FIG. 19 is a perspective view of a crank hub containing components for making an electrical connection for a smart crank system.
FIG. 20 is an additional diagram of a smart crank system in accordance with not claimed embodiments.

While an embodiment of the invention is amenable to various modifications and alternative forms, specifics thereof have been shown by way of example in the drawings and will be described in detail. It should be understood, however, that the intention is not to limit the invention to the particular example embodiments described. On the contrary, the invention is to cover all modifications, equivalents, and alternatives falling within the scope of the invention as defined by the appended claims.

### DETAILED DESCRIPTION

In the following descriptions, the present invention will be explained with reference to various exemplary embodiments. Nevertheless, these embodiments are not intended to limit the present invention to any specific example, environment, application, or particular implementation described herein. Therefore, descriptions of these example embodiments are only provided for purpose of illustration rather than to limit the present invention.

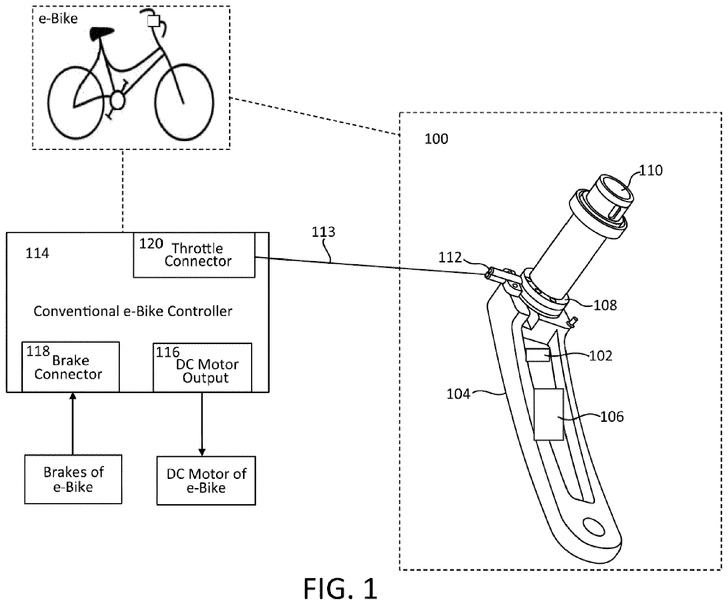

Referring to FIG. 1, the smart crank system 100 for a pedaled device includes a strain gauge 102 disposed on the crank 104 of the e-bike. A control board 106 is also disposed on the crank 104.

The control board 106 includes a micro controller and physical memory. Software code is stored in the memory and executed by the micro controller in order to control the operation of the smart crank system 100.

The control board 106 also includes motion sensors such as a gyro, an accelerometer, and a digital motion processor. The motion sensors provide the crank speed and position data to the digital motion processor on the control board 106.

The strain gauge 102 is coupled to the control board 106. The strain gauge 102 senses the strain in the crank, which allows the micro controller on the board 106 to determine the torque data and the pedaling force of the user riding the device.

A plurality of slip rings 108 are disposed around the pedal axle 110 of the e-bike (to which the crank 104 is connected). In one embodiment, pogo pin connectors 112 are disposed on the slip rings 108. Two of the slip rings 108 allow electrical power connection (Vcc and Gnd) to pass to the control board 106 while disposed on the rotating crank 104. Another slip ring 108 can be used to pass an analog throttle data signal from the control board out to a cable 113 that connects to the throttle connector of the e-bike controller 114.

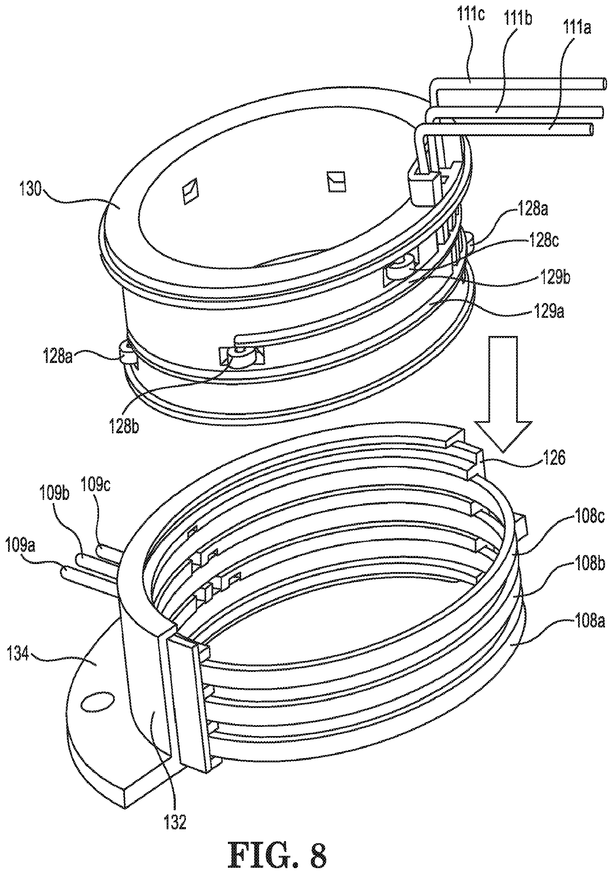

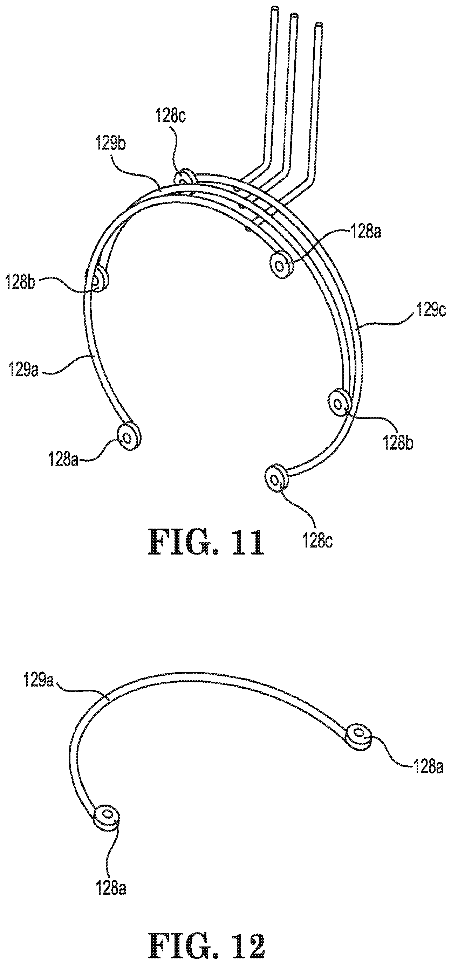

The pogo pins 112 provide a convenient means for connecting electrical power and signal conduits such as wires or data cables. Other types of connectors can also be utilized, including the bearing-style connectors of FIGS. 8-12 that will be discussed in further detail below. In a further alternative, the bearings can be replaced with polished rings that do not rotate.

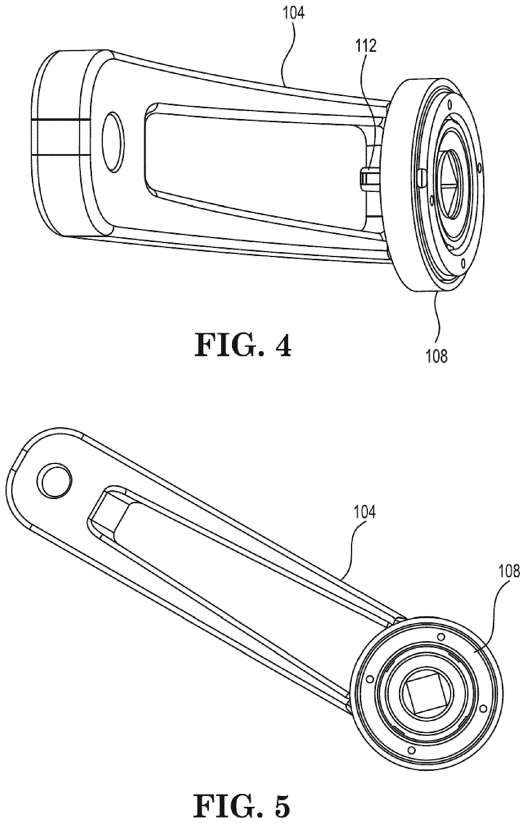

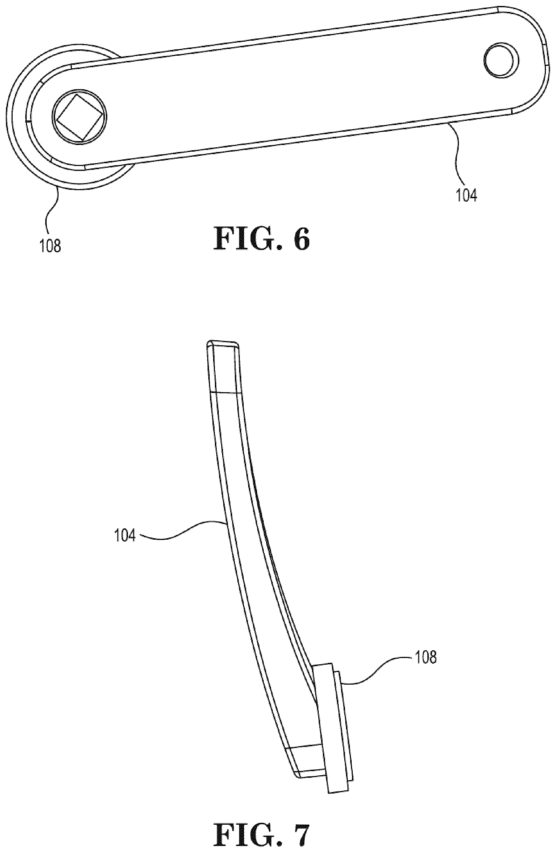

In the embodiment shown in FIG. 1, the pogo pin connectors 112 are fixed to the frame of the e-bike. However, as will be explained with respect to FIGS. 4-7, the reverse situation can also be provided where the slip rings are fixed to the crank. The pogo pin connectors 112 and slip rings 108 thus function to provide an electrical pathway between the rotating crank 104 to a stationary location on the e-bike.

More or fewer slip rings 108 can also be employed depending on how the system is configured in certain embodiments. For example, the data slip ring can be eliminated by passing the throttle data signals through the same path as the electrical power, or in a not claimed embodiment by making the signal transmission means wireless. The number of pogo pins connectors is varied accordingly. It is also contemplated that a single slip ring and pogo pin connector can be utilized in certain embodiments.

Referring to FIGS. 8-12, another means for providing rotational electrical connection to the control board 106 is disclosed. A plurality of slip rings 108a, 108b and 108c disposed in an outer carrier ring or hub 126 correspond to the respective conduits or wires 109a, 109b and 109c that carry the electrical power and throttle signals. A plurality of bearing pairs 128a, 128b and 128c are disposed in recesses in the inner hub or ring 130 and electrically connected to a respective wire or conduit 111a, 111b and 111c. Each bearing in the pairs of bearings 128a, 128b and 128c contact a respective inner surface of the slip rings 108a, 108b and 108c in order to pass electrical power and signals back and forth between wire segments 109a, 109b and 109c and 111a, 111b and 111c while the crank of the e-bike turns without wire binding.

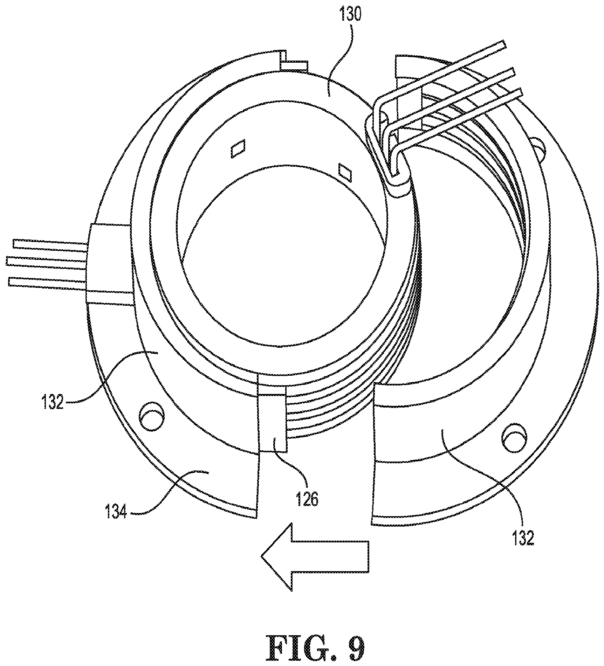

The large arrow shown in FIG. 8 indicates the insertion of the inner hub 130 into the outer hub 126. The bearings and slip rings will then be in alignment. An outer housing 132 with mounting flange 134 is disposed over the mated hubs 126 and 130 as shown in FIG. 9. The outer housing 132 can be formed as a two-part assembly that is joined as indicated by the large arrow in FIG. 9.

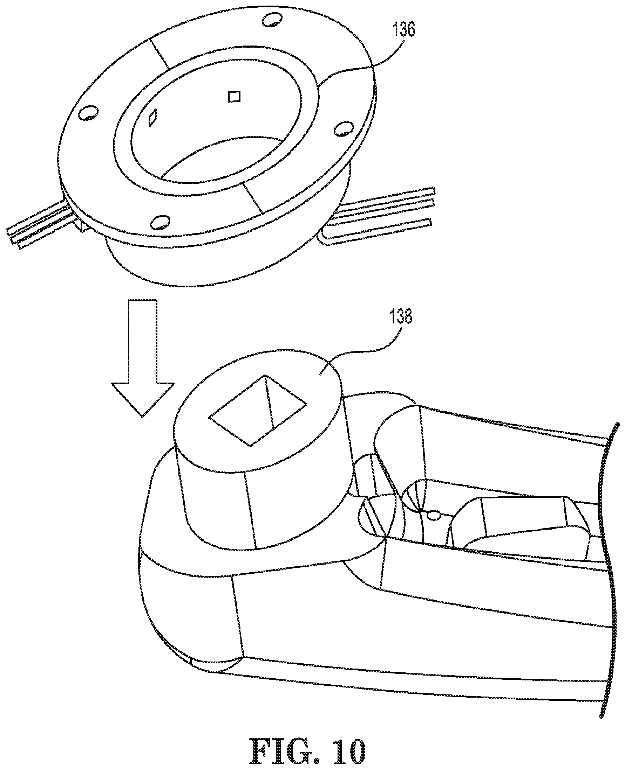

The final bearing connection assembly 136 is shown in FIG. 10. The assembly is disposed over the crank head 138 of the e-bike as indicated by the large arrow in FIG. 10. The flange 134 faces away from the crank as shown in FIG. 10 and is fixedly fastened to the e-bike's frame. However, the flange position mounting can be reversed so that the flange is fixedly fastened to the crank.

As can be seen in FIGS 8, 11 and 12, each bearing of a bearing pair 128a, 128b and 128c is disposed at the opposing end of a respective resilient metal rod 129a, 129b and 129c. The rod is formed into a curved section and provides a spring force to keep the bearings in contact wit the inner surface of the respective slip rings.

In a further aspect, an additional bearing can be placed over the crank head. The outer surface of this additional bearing then contacts the inner surface of the inner hub 130 so that the slip ring and bearing assembly 136 can rotate more smoothly as the crank rotates.

The bearing and slip ring assembly 136 can also be configured in the reverse manner of that depicted in FIGS. 8-12 and described above. In such embodiment, the slip rings 108a, 108b and 108c would be provided to the inner hub 130 and the bearings 128a, 128b and 128c would be provided to the outer hub 126.

A rotational bushing could also be used in place of the bearing to save cost.

In a further embodiment, the bearing components can be replaced with non-rotating slide rings that slip along the slip rings. Friction can be minimized by polishing the slide rings. The appearance of the slide rings would be approximately same as depicted in FIGS. 8, 11 and 12, with the difference being that the slide rings do not rotate about their center axis like bearings.

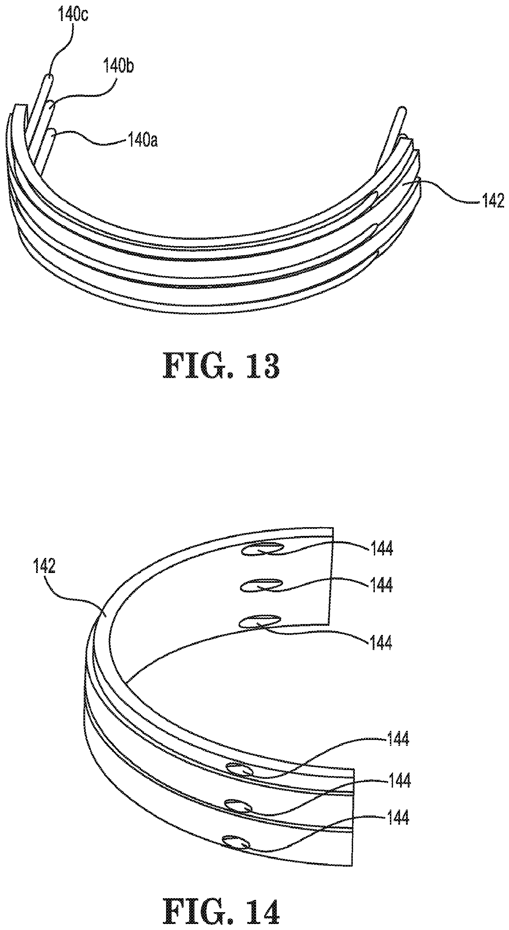

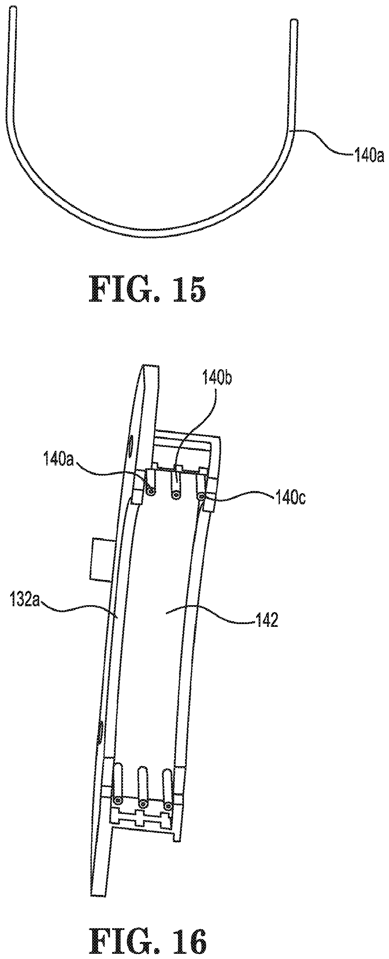

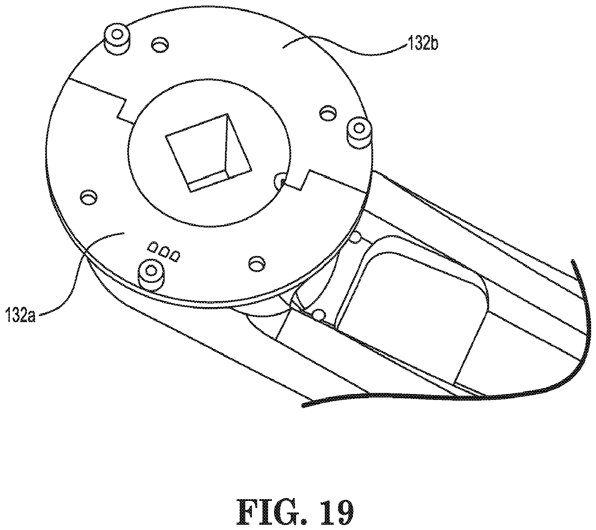

Referring to FIGS. 13-19, yet another means for providing rotational electrical connection to the control board 106 is disclosed. In this embodiment, a plurality of curved metal springs are provided that slide along the metal slip rings while the hub rotates. The springs 140a, 140b and 140c are curved so that they are generally U-shaped. The springs are disposed in a similarly-curved spring frame 142. Both ends of each spring are disposed through a respective aperture 144 defined through the frame 142 such that the ends protrude towards the inner curved side of the frame, which faces the hub of the e-bike.

Electric wires are soldered or otherwise attached to the appropriate spring. The spring/frame assembly, such as shown in FIG. 13, is disposed inside of the outer housing 132.

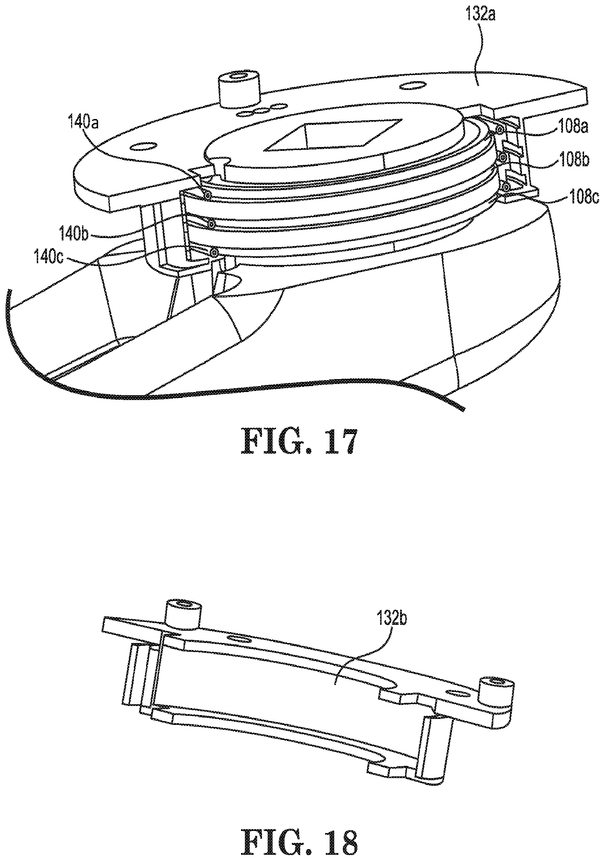

FIG. 17 illustrates the springs 140a, 140b, and 140c contacting a respective slip ring 108a, 108b and 108c.

The outer housing 132 can be a two-piece configuration 132a, 132b as shown in FIGS. 17-19. This depicted embodiment, the slip rings are disposed along the inner circumference and the springs are disposed along the outer circumference. However, it should be noted that the configuration can be reversed as well.

It is also possible to provide electrical contact utilizing more than one different means disclosed herein.

As with the pogo pins embodiment, the number of slip rings, polished rings, springs and bearings in various embodiments can be varied depending on the connectivity needs of a particular e-bike. For example, the data slip ring can be eliminated by passing the throttle data signals through the same path as the electrical power, or in a not claimed embodiment by making the signal transmission means wireless. Thus, any one of more numbers of slip rings and bearings can be provided.

The e-bike includes a conventional e-bike controller 114 that is coupled to the main battery and the drive motor via the DC Motor output 116. A bike brake input 118 is also supplied to the e-bike controller 114 so that the controller 114 knows when the rider applies their brakes.

The data output from the smart crank system 100 is received into the conventional e-bike controller 116 via the controller's throttle connector 120. Conventional e-bike controllers are configured to receive analog data input. Therefore, the controller 106 of the smart crank system 100 is configured to output throttle data as an analog signal. A digital-to-analog (D/A) converter can be included on the control board 106 for this purpose. The D/A converter can be included as part of the micro controller.

The throttle data can be in various forms. For example, the throttle data can be an analog output representing a throttle magnitude value for the e-bike controller. The throttle data can also be more complex, so that certain determined values, such as crank speed, crank position, crank torque, etc. are communicated to the e-bike controller.

The smart crank system can sense the torque of e-bike rider's pedaling force via the strain gauge 102. The smart crank micro controller can also calculate the speed and position of the crank based upon the motion sensor readings evaluated by the digital motion processor on the board 106. The motion sensors and digital motion processor can also be disposed on the crank separate from the board 106 and electrically coupled to the board 106.

The smart crank system can determine a total pedaling force of the rider based upon the measured pedaling force and crank position data. A crank angle defined between the horizontal plane and the longitudinal axis of the crank can be determined based upon the motion sensors and digital motion processor data. The measured pedaling force based upon the strain gauge data is multiplied by the cosine of the crank angle to determine the total pedaling force being exerted by the rider. Thus, the total pedaling force that is the combined force vector components in the vertical and horizontal planes can be computed. The total pedaling force can be used for computing the throttle data signal since it is more representative of the rider's applied pedaling power than the measured pedaling force based upon the strain gauge data.

The smart crank system 100 can also determine from the crank position whether the rider is braking, dismounting, resting, etc., and relay this determination to the e-bike controller 114.

The smart crank system 100 does not need a separate power source because it can be powered from e-bike controller 114 through the slip rings 108 and pogo pins 112. Alternatively, power can be supplied directly from the e-bike's main battery that is used to power the drive motor.

The smart crank system 100 can be retrofitted to existing e-bikes because the system 100 can interface with any existing e-bike through the convention throttle connector.

This smart crank system 100 can be applied to a variety of pedaled and/or electrically-powered conveyances, including bicycles, monocycles, tricycles, wheelchairs, recumbent bicycles, exercise machines, etc., where the conveyance requires the rider to operate a leg or hand operated crank/handle. The power applied to crank/handle by the operator is thus used to decide the drive motor power output.

The invention can also be configured as an e-bike featuring the smart crank system disclosed herein.

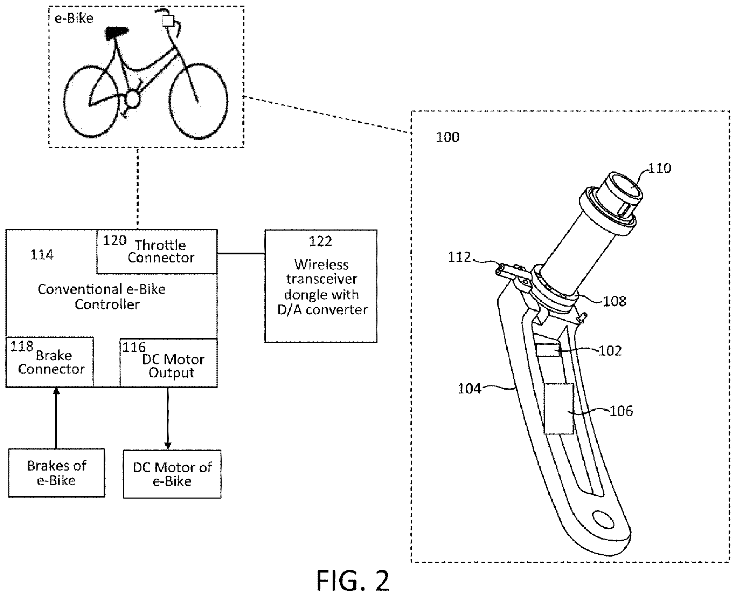

Referring to FIG. 2, the output of the control board can be wirelessly coupled to the e-bike controller 114 wirelessly via a wireless transceiver dongle 122. The board in this not claimed embodiment additionally includes a wireless transceiver to transmit the output data, which is then received by a wireless dongle 122 that is electrically coupled to the e-bike controller 114. The output from the board 106 can be digital, so a digital to analog converter is included in the dongle 122 to convert the data signals to analog for use by the e-bike controller 114. The wireless transmission means can be Bluetooth, Wi-Fi, ZigBee, cellular, radio frequency, or any other wireless transmission means.

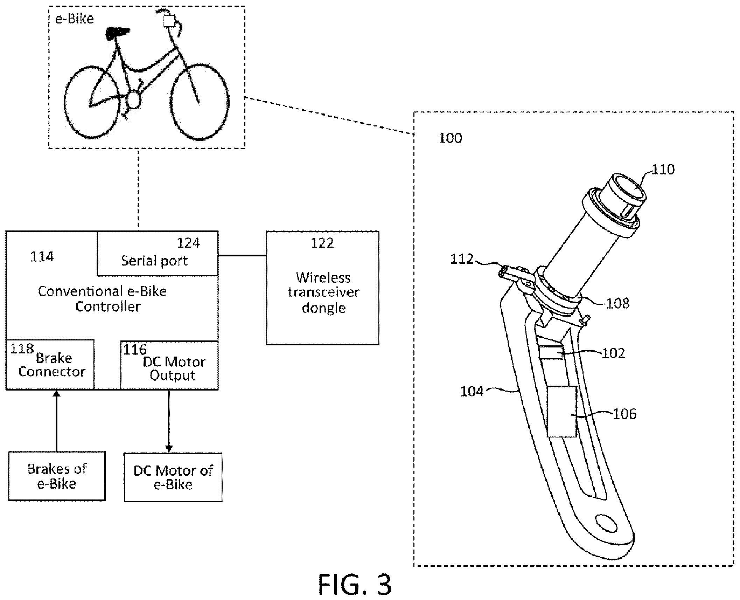

Referring to FIG. 3, the e-bike controller 114 includes a serial port 124, such as a universal asynchronous receiver-transmitter (UART) port. In this not claimed embodiment, the wireless dongle 122 connects to the serial port 122 and the dongle no longer needs to include the D/A converter. Other input types of input ports can alternatively be provided, including universal serial bus (USB) ports. It may be necessary to update the software code for the e-bike controller 114 if the controller does not support the data output protocols used by the micro controller on the smart crank board 106.

Referring to FIGS. 4-7, the crank 104 is shown. The slip ring 108 is disposed around the crank 108 while the pogo pin connector 112 rotates about the pedal axle 110 (in FIG. 1). The pedal (not shown) is disposed on the opposing end of the crank 104. The slip rings 108 and pogo pin connectors 112 permit the electrical signals and/or power to be transmitted through the rotating crank without binding up the wire cabling. In this embodiment, the wire 113 shown in FIG. 1 would be connected to the slip ring 108 and the smart crank board 106 would be connected to the pogo pin connectors 112.

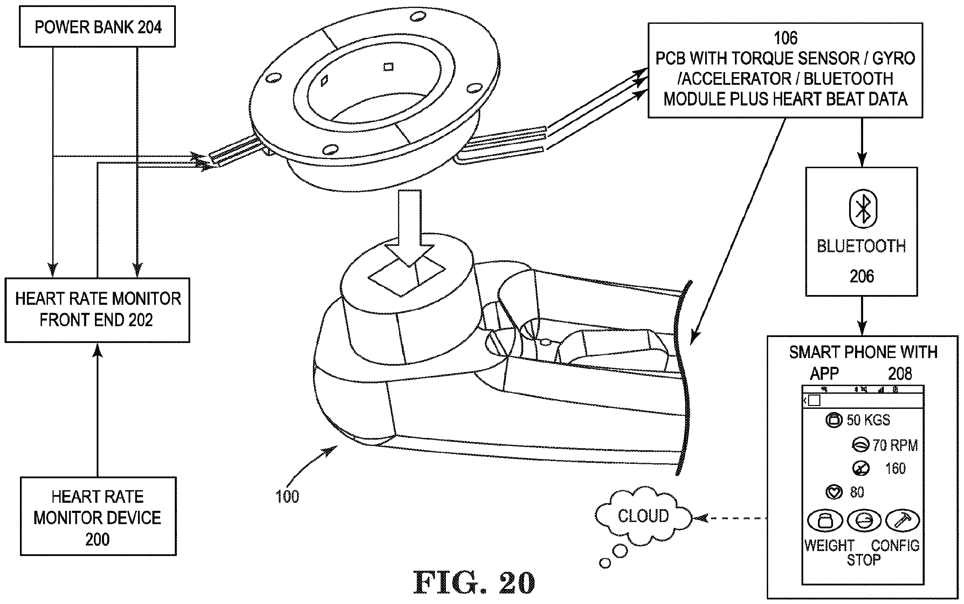

Referring to FIG. 20, the smart crank sensor system 100 is in a not claimed embodiment configured to collect and pass health data and exercise data to a smart phone app. Health data for the user is obtained from one or more sensors coupled to the user. For example, the user may be in contact with, or be wearing, a heart rate monitoring device 200. The heart rate monitor 200 is coupled to a monitor interface (hear rate monitor front end 202) and a power supply 204. Data from the heart rate monitor 200 is passed into the smart crank system 100 via one or more of the slip rings as indicated in FIG. 20, and then is received by the control board 106 in order to collect and process the user's health data.

A wireless transmitter 206, such as a Bluetooth module, is coupled to the control board 106. This allows the health data (e.g., heartbeat) and the exercise data (e.g., pedaling force / speed / angle etc.) to be transmitted wirelessly to a synced smart phone 208. An app 208 can be loaded on the smartphone to analyze, display and store the user's health and exercise data. This data can also be uploaded via the app into the cloud where the user has a cloud-based account for health analysis and exercise improvement purposes.

The smart crank system 100 described with respect to FIG. 20 can also be adapted to standard bikes and other types of exercise machines where a rotating hub and crank is employed.

In applications where a throttle data is not required, such as for exercise bikes, regular bikes and non-e-bikes, the heart rate data can be supplied as in input to the slip rings in the form of an analog signal. Power for the health monitoring devices is externally supplied as indicated in FIG. 20.

In e-bike applications, or other applications where a throttle data output is required, an additional slip ring can be provided for receiving the user health data. In such applications, the throttle output data can take into account the user's heart rate along with the other crank data in order to send a customized throttle data to the e-bike controller. For example, the amount of DC motor assist can be increased above the normal setting for a given crank data if the heart rate is above a certain threshold. Thus, taking the user's health data into account can make for more intelligent e-bike assist systems.

All of rider's exercise data (pedaling force / speed / angle etc.) and health data (heart beat) can be collected and sent to smart phone app at the same time. There is no need for two separated Bluetooth modules to send exercise data and health data separately. According to this not claimed embodiment, one can provide better data synchronization between exercise data and health data and save money for using just one Bluetooth module.

While the invention has been described in connection with what is presently considered to be the most practical and preferred embodiments, it will be apparent to those of ordinary skill in the art that the invention is not to be limited to the disclosed embodiments. It will be readily apparent to those of ordinary skill in the art that many modifications can be made thereof without departing from the scope of the present invention.

## Claims

1. A smart crank system (100) for an e-bike, the e-bike including a crank (104) and an electric motor connected to an e-bike controller (114), the e-bike controller (114) including a throttle connector (120), the smart crank system (100) comprising:
a strain gauge (102) disposed on the crank (104);
a control board (106) coupled to the strain gauge (102); and
a plurality of slip rings (108) disposed about the crank (104), **characterized in that**
the control board (106) is disposed on the crank (104) and includes a motion sensor, a digital motion processor and a micro controller,
the plurality of slip rings (108) are disposed about the crank (104) to provide for both a power connection and a control signal connection to the control board (106) without interfering with rotation of the crank (104),
wherein the control board (106) is coupled to the e-bike controller (114) via at least one of the slip rings and the throttle connector (120) of the e-bike controller (114), and
wherein the control board (106) is configured to transmit to the e-bike controller (114) an output in the form of a throttle magnitude value for the e-bike controller (114).

2. The smart crank system of claim 1, wherein the micro controller is configured to determine a crank speed, a crank position and a torque data for the crank (104) of the e-bike and report a throttle data to the e-bike controller (114) via the throttle connector (120).

3. The smart crank system of claim 2, wherein the micro controller is coupled to a digital to analog converter so that the throttle data is outputted in an analog format.

4. The smart crank system of claim 1, wherein the control board is coupled to the throttle connector via a cable (113) extending between the slip rings (108) and the throttle connector 120.

5. The smart crank system of claim 1, wherein the micro controller is coupled to a digital to analog converter so that the throttle data is outputted in an analog format.

6. The smart crank system of claim 1, further comprising a plurality of pogo pin connectors (112), each coupled to a respective one of the plurality of slip rings (108).

7. The smart crank system of claim 6, wherein a power input cable is connected to an at least one of the plurality of pogo pin connectors (112).

8. The smart crank system of claim 6, wherein a first end of a data cable (113) is connected to one of the plurality of pogo pin connectors (112).

9. The smart crank system of claim 8, wherein an opposing second end of the data cable (113) is connected to the throttle connector (120) of the e-bike controller (114).

10. An e-bike comprising a crank (104), an electric motor connected an e-bike controller (114), and the smart crank control system according to any of claims 1-9, the e-bike controller (114) including a throttle connector (120) that is connected to the smart crank system (100).

11. A method of providing electrical pedal assistance to a rider of an e-bike employing the smart crank control system (100) according to any of claims 1-9.

## Patentansprüche

1. Intelligentes Kurbelsystem (100) für ein E-Bike, wobei das E-Bike eine Kurbel (104) und einen Elektromotor, der mit einer E-Bike-Steuerung (114) verbunden ist, umfasst, wobei die E-Bike-Steuerung (114) ein Drosselsteckverbinder (120) umfasst, wobei das intelligente Kurbelsystem (100) Folgendes umfasst:
einen an der Kurbel (104) angeordneten Dehnungsmesser (102);
eine mit dem Dehnungsmesser (102) gekoppelte Steuertafel (106) und
mehrere um die Kurbel (104) angeordnete Schleifringe (108),
**dadurch gekennzeichnet, dass**
die Steuertafel (106) an der Kurbel (104) angeordnet ist und einen Bewegungssensor, einen digitalen Bewegungsprozessor und ein Programmschaltwerk umfasst,
die mehreren Schleifringe (108) um die Kurbel (104) angeordnet sind, um sowohl für eine Stromverbindung als auch eine Steuersignalverbindung zur Steuertafel (106) zu sorgen, ohne die Drehung der Kurbel (104) zu stören,
wobei die Steuertafel (106) über mindestens einen der Schleifringe und den Drosselsteckverbinder (120) der E-Bike-Steuerung (114) mit der E-Bike-Steuerung (114) gekoppelt ist und
wobei die Steuertafel (106) dazu ausgelegt ist, eine Ausgabe in Form eines Drosselgrößenwerts für die E-Bike-Steuerung (114) an die E-Bike-Steuerung (114) zu übertragen.

2. Intelligentes Kurbelsystem nach Anspruch 1, wobei das Programmschaltwerk dazu ausgelegt ist, eine Kurbeldrehzahl, eine Kurbelstellung und Drehmomentdaten für die Kurbel (104) des E-Bikes zu bestimmen und Drosseldaten über den Drosselsteckverbinder (120) an die E-Bike-Steuerung (114) zu senden.

3. Intelligentes Kurbelsystem nach Anspruch 2, wobei das Programmschaltwerk mit einem Digital-Analog-Wandler gekoppelt ist, sodass die Drosseldaten im analogen Format ausgegeben werden.

4. Intelligentes Kurbelsystem nach Anspruch 1, wobei die Steuertafel über ein Kabel (113), das sich zwischen den Schleifringen (108) und dem Drosselsteckverbinder (120) erstreckt, mit dem Drosselsteckverbinder gekoppelt ist.

5. Intelligentes Kurbelsystem nach Anspruch 1, wobei das Programmschaltwerk mit einem Digital-Analog-Wandler gekoppelt ist, sodass die Drosseldaten im analogen Format ausgegeben werden.

6. Intelligentes Kurbelsystem nach Anspruch 1, ferner mehrere Federkontaktsteckverbinder (112) umfassend, die jeweils mit einem jeweiligen der mehreren Schleifringe (108) gekoppelt sind.

7. Intelligentes Kurbelsystem nach Anspruch 6, wobei ein Stromeingangskabel mit mindestens einem der mehreren Federkontaktsteckverbinder (112) verbunden ist.

8. Intelligentes Kurbelsystem nach Anspruch 6, wobei ein erstes Ende eines Datenkabels (113) mit einem der mehreren Federkontaktsteckverbinder (112) verbunden ist.

9. Intelligentes Kurbelsystem nach Anspruch 8, wobei ein gegenüberliegendes zweites Ende des Datenkabels (113) mit dem Drosselsteckverbinder (120) der E-Bike-Steuerung (114) verbunden ist.

10. E-Bike, eine Kurbel (104), einen mit einer E-Bike-Steuerung (114) verbundenen Elektromotor und das intelligente Kurbelsystem nach einem der Ansprüche 1-9 umfassend, wobei die E-Bike-Steuerung (114) einen Drosselsteckverbinder (120) umfasst, der mit dem intelligenten Kurbelsystem (100) verbunden ist.

11. Verfahren zum Vorsehen einer elektrischen Pedalunterstützung für einen Fahrer eines E-Bikes unter Verwendung des intelligenten Kurbelsystems (100) nach einem der Ansprüche 1-9.

## Revendications

1. Système de manivelle intelligent (100) pour une bicyclette électrique, la bicyclette électrique comprenant une manivelle (104) et un moteur électrique relié à un dispositif de commande de bicyclette électrique (114), le dispositif de commande de bicyclette électrique (114) comprenant un dispositif de liaison d'accélération (120), le système de manivelle intelligent (100) comprenant :
une jauge de contrainte (102) disposée sur la manivelle (104) ;
une carte de commande (106) couplée à la jauge de contrainte (102) ; et
une pluralité de bagues collectrices (108) disposées autour de la manivelle (104),
**caractérisé en ce que**
la carte de commande (106) est disposée sur la manivelle (104) et comprend un capteur de mouvement, un processeur de mouvement numérique et un microcontrôleur,
la pluralité de bagues collectrices (108) sont disposées autour de la manivelle (104) afin d'assurer à la fois une liaison de puissance et une liaison de signaux de commande avec la carte de commande (106) sans entraver la rotation de la manivelle (104),
la carte de commande (106) est couplée au dispositif de commande de bicyclette électrique (114) par le biais d'au moins une des bagues collectrices et du dispositif de liaison d'accélération (120) du dispositif de commande de bicyclette électrique (114), et
la carte de commande (106) est conçue pour transmettre au dispositif de commande de bicyclette électrique (114) une sortie sous la forme d'une grandeur d'accélération pour le dispositif de commande de bicyclette électrique (114).

2. Système de manivelle intelligent selon la revendication 1, dans lequel le microcontrôleur est conçu pour déterminer une vitesse de la manivelle, une position de la manivelle et des données de couple pour la manivelle (104) de la bicyclette électrique et transmettre des données d'accélération au dispositif de commande de bicyclette électrique (114) par le biais du dispositif de liaison d'accélération (120).

3. Système de manivelle intelligent selon la revendication 2, dans lequel le microcontrôleur est couplé à un convertisseur numérique-analogique de telle sorte que les données d'accélération soient produites en sortie dans un format analogique.

4. Système de manivelle intelligent selon la revendication 1, dans lequel la carte de commande est couplée au dispositif de liaison d'accélération par le biais d'un câble (113) s'étendant entre les bagues collectrices (108) et le dispositif de liaison d'accélération (120).

5. Système de manivelle intelligent selon la revendication 1, dans lequel le microcontrôleur est couplé à un convertisseur numérique-analogique de telle sorte que les données d'accélération soient produites en sortie dans un format analogique.

6. Système de manivelle intelligent selon la revendication 1, comprenant en outre une pluralité de dispositifs de liaison à broche Pogo (112), chacun couplés à une bague respective parmi la pluralité de bagues collectrices (108).

7. Système de manivelle intelligent selon la revendication 6, dans lequel un câble d'alimentation est relié à au moins l'un de la pluralité de dispositifs de liaison à broche Pogo (112).

8. Système de manivelle intelligent selon la revendication 6, dans lequel une première extrémité d'un câble de données (113) est reliée à l'un de la pluralité de dispositifs de liaison à broche Pogo (112).

9. Système de manivelle intelligent selon la revendication 8, dans lequel une seconde extrémité opposée du câble de données (113) est reliée au dispositif de liaison d'accélération (120) du dispositif de commande de bicyclette électrique (114).

10. Bicyclette électrique comprenant une manivelle (104), un moteur électrique relié à un dispositif de commande de bicyclette électrique (114) et le système de commande de manivelle intelligent selon l'une quelconque des revendications 1 à 9, le dispositif de commande de bicyclette électrique (114) comprenant un dispositif de liaison d'accélération (120) qui est relié au système de manivelle intelligent (100).

11. Procédé de fourniture d'une assistance au pédalage électrique à un utilisateur d'une bicyclette électrique employant le système de commande de manivelle intelligent (100) selon l'une quelconque des revendications 1 à 9.
